# FASCICULE DE BREVET EUROPEEN

(11) **EP 3 926 678 B1**
(45) Date de publication et mention de la délivrance du brevet: **27.03.2024**
(21) Numéro de dépôt: 21179953.1
(22) Date de dépôt: 17.06.2021
(51) Int. Cl.: H01L 23/58, G01R 33/06

(54) **PROTECTION DE PUCE OU DE BOITIER-SYSTEME ELECTRONIQUE UTILISANT L'EFFET DE MAGNETO-IMPEDANCE GEANTE (GMI)**
SCHUTZ EINES CHIPS ODER EINES SYSTEM-IN PACKAGE (SIP) MITTELS DES RIESENMAGNETOIMPEDANZ-EFFEKTS
PROTECTION OF A CHIP OR SYSTEM IN PACKAGE (SIP) USING THE GIANT MAGNETOIMPEDANCE (GMI) EFFECT

(30) Priorité: 19.06.2020 FR 2006442
(43) Date de publication de la demande: 22.12.2021
(73) Titulaire: Commissariat à l'énergie atomique et aux énergies alternatives, 75015 Paris (FR)
(72) Inventeur: SOHIER, Thibaut, 38054 GRENOBLE CEDEX 09 (FR); BOREL, Stephan, 38054 GRENOBLE CEDEX 09 (FR); MICHEL, Jean-Philippe, 38054 GRENOBLE CEDEX 09 (FR); SIMON, Gilles, 38054 GRENOBLE CEDEX 09 (FR)
(74) Mandataire: Brevalex

(56) Documents cités:
- WO-A1-03/085410
- DE-A1-102013 205 729
- FR-A1- 2 881 823
- US-B2- 7 656 630

## Description

### DOMAINE TECHNIQUE

L'invention porte sur le domaine de la protection des puces et des boîtiers-systèmes électroniques, ou SiP (« System in Package » en anglais).

### ÉTAT DE LA TECHNIQUE ANTÉRIEURE

Les attaques que peut subir une puce ou un SiP ont généralement pour but d'accéder à des données confidentielles stockées dans la mémoire d'un circuit électronique de la puce ou du SiP. Une puce ou un SiP peut être attaqué de façon logicielle ou matérielle. Dans le second cas, les attaques, dites physiques, peuvent s'opérer de diverses manières : chimique, laser, électromagnétique, électrique, etc.

Certaines attaques, dites non-invasives ou par canaux auxiliaires, n'impliquent pas une introduction dans le dispositif (puce ou SiP) attaqué. Ces attaques consistent à mesurer des données extérieures au dispositif : mesure de la consommation électrique du dispositif, mesure des émissions électromagnétiques émanant du dispositif, mesure de la chaleur émise par le dispositif, etc.

D'autres attaques, dites semi-invasives, impliquent une introduction modérée dans le dispositif attaqué qui reste, après ces attaques, opérationnel ou fonctionnel, comme par exemple les attaques par injection de fautes à l'aide d'un laser (impulsion lumineuse). Ces attaques se font aussi bien par la face avant du dispositif que par sa face arrière (qui correspond à la face du côté de laquelle se trouvent les éléments de connexion, par exemple les billes de connexion).

Enfin, d'autres attaques, dites invasives, impliquent de détruire partiellement le boîtier du dispositif attaqué, comme par exemple les attaques par probing (ou par sonde) et la rétro-conception. Ces attaques impliquent un accès et une modification irréversible du circuit qui peut rester fonctionnel ou non après ces attaques

Les attaques par laser ou par effet photo-électrique sont actuellement les attaques physiques les plus communément perpétrées en raison de la généralisation des outils permettant de mettre en oeuvre ce type d'attaques. Le plus souvent, une telle attaque consiste à exciter une région du circuit comportant au moins un transistor de sorte à le faire changer d'état. Le laser utilisé émet par exemple, dans le cas des attaques face arrière, dans le proche infrarouge ou dans le proche UV. Ce changement d'état inopiné du transistor induit des erreurs, ou fautes, dans l'exécution d'une ou plusieurs opérations mises en oeuvre dans le circuit attaqué. Si celles-ci correspondent à des opérations de chiffrement/déchiffrement, il est possible, en analysant des valeurs erronées, de retrouver des informations relatives à la clé de chiffrement (c'est-à-dire la valeur des bits qui la constituent) utilisée par le circuit attaqué.

Pour contrer les attaques par laser réalisées depuis la face avant des dispositifs, il a notamment été proposé d'ajouter en face avant des détecteurs de lumière à base de diodes. Il a également été proposé d'ajouter en face avant une couche « anti-intrusion », formée par exemple d'un serpentin sur lequel une mesure continue de la résistance électrique est réalisée afin de vérifier qu'une région de la face avant n'a pas été endommagée dans le but de d'offrir un accès au circuit pour le faisceau laser.

Des solutions similaires de protection ont également été proposées au niveau de la face arrière des dispositifs.

Les attaques par ondes électromagnétiques consistent généralement à réaliser soit une injection de faute dans les composants des circuits de la puce ou du SiP attaqué via des impulsions électromagnétiques, soit à déduire la valeur des bits composant une clé de chiffrement à partir d'observations du champ électromagnétique émis par la puce ou le système en fonctionnement. Il existe des solutions pour contrer ce type d'attaque, comme par exemple la réalisation d'un blindage électromagnétique sur une ou plusieurs faces du dispositif ou encore l'émission d'ondes électromagnétiques parasites afin de lisser le spectre électromagnétique émanant de la puce ou du SiP.

De manière générale, les solutions proposées jusqu'à présent pour protéger les puces et SiP de ces attaques ne sont pas complètement satisfaisantes car elles restent vulnérables En outre, aucune de ces solutions n'offre une protection solide vis-à-vis des attaques par ondes électromagnétiques qui peuvent être réalisées avec des injecteurs fournissant des ondes de fréquences très variées et qui peuvent être localisés à différents endroits. Enfin, certaines protections ne peuvent s'appliquer qu'à des puces et non à des SiP.

En outre, les attaques visant à étudier ou perturber le fonctionnement d'un dispositif sont généralement réalisées lorsque celui-ci est alimenté. Il est alors possible de détecter ces attaques par la mesure en temps réel d'une grandeur physique caractéristique d'une structure de protection, telle qu'une résistance électrique ou une intensité lumineuse par exemple. Mais dans certains cas, les attaques peuvent avoir lieu alors que le composant n'est pas alimenté. La détection n'est alors possible qu'a *posteriori* lorsque le composant est de nouveau alimenté et en fonctionnement, ce qui rend la détection plus difficile et donc la protection moins efficace.

Le document WO 03/085410 A1 décrit un dispositif semi-conducteur correspondant à une puce électronique formée sur un substrat semi-conducteur et comprenant un élément de protection formé sur la face avant du dispositif et comprenant des particules magnétiques incluses dans une couche et des capteurs magnéto-résistifs. L'intégrité de l'élément de protection est vérifiée par mesure d'impédance. Ce document décrit également que les capteurs peuvent être de type GMR.

De plus, le document US 7 656 630 B2 montre un dispositif incluant une puce électronique, comportant au moins un élément de protection d'au moins une partie d'au moins une face du dispositif, ledit élément de protection étant disposé sur la puce et comprenant au moins :
- un élément de détection d'attaque du dispositif comportant au moins un matériau électriquement conducteur, et
- un émetteur de champ magnétique auquel ledit matériau électriquement conducteur est destiné à être soumis.

Ce document décrit également que les capteurs peuvent être de type GMR.

Le document FR 2 881 823 A1 concerne l'application de l'effet GMI à un capteur de position sans contact. Ce capteur fait appel à un aimant permanent générant un champ magnétique auquel est soumise une zone de pistes conductrices sur lesquelles une tension alternative est appliquée et formant une surface sensible à ce champ magnétique.

### EXPOSÉ DE L'INVENTION

Un but de la présente invention est de proposer un nouveau type de protection d'une puce électronique ou d'un boîtier-système électronique qui soit efficace contre tous types d'attaques, qu'elles nécessitent ou non un accès dans la puce ou au boîtier-système ou une détérioration de la puce ou du boîtier-système (par laser, ondes électromagnétiques, attaque par probing, rétroconception, etc.).

Pour cela, la présente invention propose un dispositif de type puce ou boîtier-système électronique (ou SiP) selon la revendication 1, comportant au moins un élément de protection d'au moins une partie d'au moins une face du dispositif, ledit élément de protection étant disposé dans le dispositif et comprenant au moins :
- un élément de détection d'attaque du dispositif comportant au moins un matériau électriquement conducteur à effet de magnéto-impédance géante, GMI, et
- un émetteur de champ magnétique auquel le matériau électriquement conducteur à effet GMI est destiné à être soumis,
et dans lequel l'effet GMI est destiné à être obtenu dans le matériau électriquement conducteur à effet GMI lorsqu'il est parcouru par un courant électrique alternatif d'excitation et soumis au champ magnétique de l'émetteur de champ magnétique.

Ainsi, il est proposé de protéger le dispositif de manière active grâce à l'utilisation d'un matériau électriquement conducteur présentant un effet de magnétoimpédance géante (GMI). Grâce à cet effet, l'élément de détection d'attaque du dispositif est doté de caractéristiques, notamment son impédance, qui se modifient en cas d'attaque de la région du dispositif protégée par l'élément de protection ou en cas de retrait ou de modification d'au moins une partie de l'élément de détection d'attaque du dispositif. Certaines attaques peuvent notamment modifier l'impédance de l'élément de détection d'attaque de manière irréversible, rendant impossible la restauration de cette valeur d'impédance après l'attaque.

L'élément de protection peut être disposé en regard de la région du dispositif à protéger de manière à ce qu'une attaque ne puisse être mise en oeuvre sans retirer ou modifier cet élément de protection pour pouvoir accéder à cette région du dispositif.

Un des avantages apportés par l'effet GMI est qu'une variation importante de l'impédance de l'élément de détection d'attaque du dispositif est obtenue même lorsque la variation du champ magnétique auquel cet élément est soumis est faible. Un autre avantage lié à l'utilisation d'un matériau ferromagnétique est que son aimantation présente une valeur différente suivant le sens de variation (croissant ou décroissant) du champ magnétique auquel il est soumis, ce qui permet de renseigner sur son historique et donc de détecter *a posteriori* qu'une attaque EM a eu lieu précédemment.

La présente invention permet à la fois de bloquer certaines attaques, de détecter en temps réel certaines attaques, et de détecter *a posteriori* certaines attaques.

Dans ce dispositif, la lecture des caractéristiques (l'impédance) de l'élément de détection d'attaque du dispositif, lorsque le dispositif est alimenté électriquement, permet de vérifier qu'aucune modification n'a été apportée à l'élément de protection (et donc que la région protégée du dispositif n'a pas subi d'attaque), y compris lorsque le dispositif n'était pas alimenté électriquement. Pour cela, l'impédance de l'élément de détection est mesurée et comparée à une valeur de référence, par exemple stockée dans une mémoire du dispositif, pour une valeur de champ magnétique donnée.

L'élément de protection du dispositif permet donc de détecter toute modification de l'environnement électromagnétique du dispositif, conférant une bonne protection du dispositif notamment vis-à-vis des attaques électromagnétiques, ainsi que toute modification de la structure de l'élément de protection, conférant une bonne protection du dispositif vis-à-vis des attaques laser ou autres attaques nécessitant un accès au composant.

En outre, les matériaux utilisés pour former l'élément de protection agissent comme un bouclier, ou blindage, vis-à-vis des ondes électromagnétiques, ce qui contribue à protéger le dispositif.

L'effet GMI obtenu correspond à une forte variation de l'impédance du matériau électriquement conducteur présentant un tel effet, lorsqu'il est parcouru par un courant d'excitation alternatif haute fréquence (de l'ordre de quelques kHz jusqu'à plusieurs GHz, par exemple comprise entre 1 kHz et 10 GHz) et soumis à un champ magnétique extérieur qui dépend du matériau utilisé et qui est par exemple de l'ordre de 1 Oe ou 80 A/m, ou compris entre environ 1 Oe et 100 Oe, ou bien un champ magnétique compris entre environ 0,1 mT et 10 mT.

L'amplitude du courant d'excitation alternatif est par exemple comprise entre 5 mA et 300 mA, ou entre 10 mA et 300 mA, ou entre 20 mA et 300 mA.

Un boîtier-système électronique, ou SiP, correspond à un ensemble de puces électroniques, circuits intégrés ou autres composants (passifs, MEMS, etc...) enfermés dans un même boîtier ou module, ces puces étant disposées les unes à côté des autres et/ou les unes au-dessus des autres, sur un support, et connectées électriquement entre elles et à des connexions extérieures au boîtier par des fils et/ou par flip-chip (ou puce retournée). Un tel boîtier-système électronique peut également être appelé « système dans un boîtier » ou « système en boîtier ».

Le matériau magnétique électriquement conducteur à effet GMI peut correspondre à un matériau présentant les propriétés suivantes :
- qui soit magnétique doux, c'est-à-dire qui soit facilement magnétisable grâce à un cycle d'hystérésis étroit ;
- dont le champ coercitif Hc soit inférieur ou égal à 10 Oe ;
- dont la perméabilité magnétique relative soit supérieure ou égale à 100.

De manière avantageuse, le matériau électriquement conducteur à effet GMI peut être un matériau ferromagnétique doux.

Le dispositif peut comporter une mémoire, un FPGA (« Field Programmable Gate Array » en anglais, ou circuit logique programmable) ou un ASIC (« Application-Specific Integrated Circuit », ou circuit intégré spécialisé) comprenant par exemple un processeur ainsi que d'autres composants tels que des composants passifs, des capteurs, etc.

Le dispositif peut comporter un matériau d'encapsulation recouvrant au moins l'élément de détection d'attaque du dispositif, ou recouvrant l'élément de protection.

L'élément de détection d'attaque du dispositif peut comprendre au moins :
- une portion du matériau électriquement conducteur à effet GMI, ou
- une portion de matériau non-magnétique, ou amagnétique, et électriquement conducteur disposée entre au moins deux portions du matériau électriquement conducteur à effet GMI, ou
- une portion de matériau non-magnétique, ou amagnétique, et électriquement conducteur entourée du matériau électriquement conducteur à effet GMI qui forme une gaine autour de la portion de matériau non-magnétique et électriquement conducteur, ou
- un empilement alterné de portions de matériau électriquement conducteur non magnétique, ou amagnétique, et de portions de matériau électriquement conducteur à effet GMI (alternance de matériaux magnétique et non magnétique : magnétique / non magnétique / magnétique / non magnétique / magnétique / non magnétique/.../magnétique).

En réalisant l'élément de détection d'attaque avec au moins une portion de matériau non-magnétique, ou amagnétique, et électriquement conducteur disposée entre au moins deux portions du matériau électriquement conducteur à effet GMI, les propriétés GMI obtenues dans cet élément de détection d'attaque sont améliorées par rapport à un élément de détection d'attaque comportant seulement une portion du matériau électriquement conducteur à effet GMI. En réalisant l'élément de détection d'attaque avec une portion de matériau non-magnétique, ou amagnétique, et électriquement conducteur entourée du matériau électriquement conducteur à effet GMI qui forme une gaine autour de la portion de matériau non-magnétique et électriquement conducteur, l'amélioration des propriétés GMI est encore plus importante.

Le matériau non-magnétique, ou amagnétique, peut correspondre à un matériau paramagnétique ou diamagnétique, ou non-ferromagnétique.

Un matériau paramagnétique correspond à un matériau pouvant acquérir, lorsqu'il est soumis à un champ magnétique, une aimantation faible et de même sens que le champ magnétique, et qui perd cette aimantation dès qu'il n'est plus soumis à ce champ magnétique. Un tel matériau paramagnétique correspond par exemple à de l'aluminium ou du platine.

Un matériau diamagnétique correspond à un matériau pouvant acquérir, lorsqu'il est soumis à un champ magnétique, une aimantation faible et dans le sens opposé au champ magnétique, et qui perd cette aimantation dès qu'il n'est plus soumis à ce champ magnétique. Un tel matériau diamagnétique correspond par exemple à du cuivre, du zinc, de l'argent ou de l'or.

Le matériau électriquement conducteur à effet GMI peut correspondre à un métal, ou un alliage métallique, comprenant au moins l'un des éléments suivants : Fe, Ni, Co.

Le matériau non-magnétique peut correspondre à au moins l'un des matériaux suivants : titane, or, cuivre, tungstène, aluminium, platine, argent, zinc.

Le matériau électriquement conducteur à effet GMI présente une ou plusieurs anisotropies magnétiques. Une telle anisotropie magnétique peut être obtenue en soumettant le matériau électriquement conducteur à effet GMI à un champ magnétique lors de son dépôt, au cours de la réalisation de l'élément de protection, et/ou en mettant en oeuvre un recuit sous champ magnétique après le dépôt du matériau électriquement conducteur voire même à la fin de la réalisation du dispositif. Une telle anisotropie permet en outre de renforcer la protection conférée par l'élément de protection car elle ajoute à l'élément de protection une caractéristique difficilement reproductible. De manière avantageuse, cette anisotropie magnétique peut présenter une variabilité générée aléatoirement, ce qui permet de renforcer la non-reproductibilité de l'élément de protection. Cette particularisation de la protection permet de la rendre différente d'un dispositif à l'autre et empêche un attaquant d'utiliser sa connaissance d'un dispositif pour en attaquer un autre.

L'élément de protection peut former un capteur localisé en regard de ladite partie de la face du dispositif protégée par l'élément de protection, ou l'élément de protection peut former une couche de protection disposée en regard de toute la surface de la face du dispositif protégée par l'élément de protection.

L'élément de détection d'attaque du dispositif peut s'étendre, dans un plan parallèle à ladite face du dispositif protégée par l'élément de protection, selon au moins un motif de serpentin et/ou de spirale. Cette configuration de l'élément de détection apporte une protection supplémentaire notamment vis-à-vis des attaques par laser.

L'émetteur de champ magnétique peut comporter des particules de matériau magnétique dispersées dans un matériau entourant au moins partiellement l'élément de détection d'attaque du dispositif, et/ou l'émetteur de champ magnétique peut comporter au moins une portion de matériau électriquement conducteur dans lequel un courant électrique continu ou alternatif est destiné à circuler.

Le contrôle d'intégrité de l'élément de protection est réalisé par une mesure de l'impédance complexe de l'élément de détection lorsque celui-ci est parcouru par un courant alternatif (AC) et soumis au champ magnétique créé par l'émetteur de champ. Ce champ magnétique peut être statique (par exemple si l'émetteur de champ comporte des particules magnétiques ou s'il comporte un matériau conducteur parcouru par un courant continu ou DC) ou variable (si l'émetteur de champ est parcouru par un courant AC).

Le contrôle d'intégrité de l'élément de protection peut également être complété par une mesure au niveau de l'émetteur de champ. Si celui-ci est parcouru par un courant DC, il s'agit d'une mesure de résistance ; et s'il est parcouru par un courant AC, c'est une mesure d'impédance complexe qui serait réalisée. Une mesure d'impédance complexe a pour avantage, par rapport à une mesure de résistance, de permettre également la détection d'une modification impliquant un déphasage dans le courant circulant dans l'émetteur de champ, ce qui apporte une information supplémentaire et améliore la protection. Si, de plus, l'émetteur de champ présente lui aussi un effet GMI, alors cette mesure d'impédance complexe en courant AC dépendra fortement de l'environnement magnétique et l'émetteur de champ constituera alors un second élément de détection qui interagira avec le premier élément de détection.

Dans un mode de réalisation particulier :
- plusieurs parties de l'élément de détection d'attaque du dispositif peuvent être chacune formées d'au moins deux portions distinctes, espacées l'une de l'autre et comprenant chacune deux extrémités reliées aux deux extrémités de l'autre portion, et
- plusieurs parties de la portion de matériau électriquement conducteur de l'émetteur de champ magnétique peuvent être chacune formées d'au moins deux portions distinctes, espacées l'une de l'autre et comprenant chacune deux extrémités reliées aux deux extrémités de l'autre portion, et
- l'élément de détection d'attaque du dispositif et la portion de matériau électriquement conducteur de l'émetteur de champ magnétique peuvent être disposés l'un à côté de l'autre et tels que les portions des parties de l'élément de détection d'attaque du dispositif se trouvant du côté de la portion de matériau électriquement conducteur de l'émetteur de champ magnétique soient disposées de manière imbriquée avec les portions des parties de la portion de matériau électriquement conducteur de l'émetteur de champ magnétique se trouvant du côté de l'élément de détection d'attaque du dispositif.

Dans cette configuration, chacune des portions (sauf éventuellement celles se trouvant aux extrémités de l'élément de détection) des parties de l'élément de détection d'attaque du dispositif se trouvant du côté de la portion de matériau électriquement conducteur de l'émetteur de champ magnétique peut être disposée entre deux portions des parties de la portion de matériau électriquement conducteur de l'émetteur de champ magnétique se trouvant du côté de l'élément de détection d'attaque du dispositif. De plus, chacune des portions (sauf éventuellement celles se trouvant aux extrémités de l'élément de détection) des parties de la portion de matériau électriquement conducteur de l'émetteur de champ magnétique se trouvant du côté de l'élément de détection d'attaque du dispositif peut être disposée entre deux portions des parties de l'élément de détection d'attaque du dispositif se trouvant du côté de la portion de matériau électriquement conducteur de l'émetteur de champ magnétique.

Dans cette configuration, l'élément de détection et la portion conductrice de l'émetteur de champ magnétique forment une suite de diviseurs de courant qui interagissent les uns sur les autres. La détection d'une attaque dans une partie de l'élément de protection se propagera rapidement dans l'ensemble de l'élément de détection, engendrant une forte variation de son impédance.

La portion de matériau électriquement conducteur de l'émetteur de champ magnétique peut s'étendre, dans un plan parallèle à ladite face du dispositif protégée par l'élément de protection, selon au moins un motif de serpentin et/ou de spirale. Cette configuration de la portion de matériau électriquement conducteur de l'émetteur de champ magnétique apporte une protection supplémentaire notamment vis-à-vis des attaques par laser si la dimension ou la disposition des motifs ne permet pas de passer au travers.

L'élément de protection peut comporter au moins deux éléments de détection d'attaque du dispositif distincts s'étendant l'un à côté de l'autre et à côté desquels la portion de matériau électriquement conducteur de l'émetteur de champ magnétique est disposée.

L'élément de détection d'attaque du dispositif et la portion de matériau électriquement conducteur de l'émetteur de champ magnétique peuvent être disposés dans deux plans différents et tels que la distance entre eux, selon une direction perpendiculaire à la face du dispositif protégée par l'élément de protection, ne soit pas constante. Une telle configuration permet de renforcer la protection conférée par l'élément de protection car elle ajoute une caractéristique difficilement reproductible (la distance variable entre l'élément de détection d'attaque du dispositif et la portion de matériau électriquement conducteur de l'émetteur de champ magnétique) à l'élément de protection. Cette configuration peut être obtenue en disposant l'élément de détection et la portion de matériau électriquement conducteur de l'émetteur de champ magnétique l'un au-dessus de l'autre et séparés par une couche d'épaisseur non-constante.

L'élément de détection d'attaque du dispositif peut comporter une ou plusieurs parties dont les dimensions sont telles que lesdites parties sont dégradées lors d'une attaque du dispositif. Ces parties de l'élément de détection peuvent former des « fusibles », c'est-à-dire des parties qui se dégradent, voire se détruisent, lors d'une augmentation du courant circulant dans l'élément de détection engendrée par une attaque. Cette configuration apporte une protection supplémentaire au dispositif vis-à-vis des attaques potentielles menées à l'encontre du dispositif.

Le dispositif peut comporter en outre :
- un dispositif de lecture d'impédance de l'élément de détection d'attaque du dispositif ;
- une mémoire dans laquelle au moins une valeur de référence de l'impédance de l'élément de détection d'attaque du dispositif est destinée à être stockée.

Une source de courant alternatif peut être couplée électriquement à l'élément de détection d'attaque du dispositif. Cette source de courant peut être externe au dispositif.

Le dispositif peut comporter en outre une mémoire dans laquelle plusieurs valeurs binaires sont stockées, chacune desdites valeurs binaires étant représentative de la comparaison entre une valeur de référence et une valeur d'impédance de l'élément de détection d'attaque du dispositif pour une valeur donnée du champ magnétique destiné à être émis par l'émetteur de champ magnétique.

Ces différentes valeurs binaires, lorsqu'elles sont considérées ensemble, forment un code binaire représentant une « signature » de l'élément de détection d'attaque du dispositif. Une modification de ce code binaire, lors d'une lecture des impédances de l'élément de détection et d'une comparaison des valeurs lues avec les valeurs de référence, signifie que le dispositif a subi une attaque.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif muni d'un élément de protection, objet de la présente invention ;
- la figure 2 représente un exemple de réalisation de l'élément de détection d'attaque du dispositif selon l'invention ;
- les figures 3 et 4 représentent schématiquement une partie d'un élément de détection d'attaque du dispositif selon différentes variantes de réalisation ;
- les figures 5 à 10 représentent schématiquement des parties d'un élément de protection du dispositif selon l'invention selon différentes variantes de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

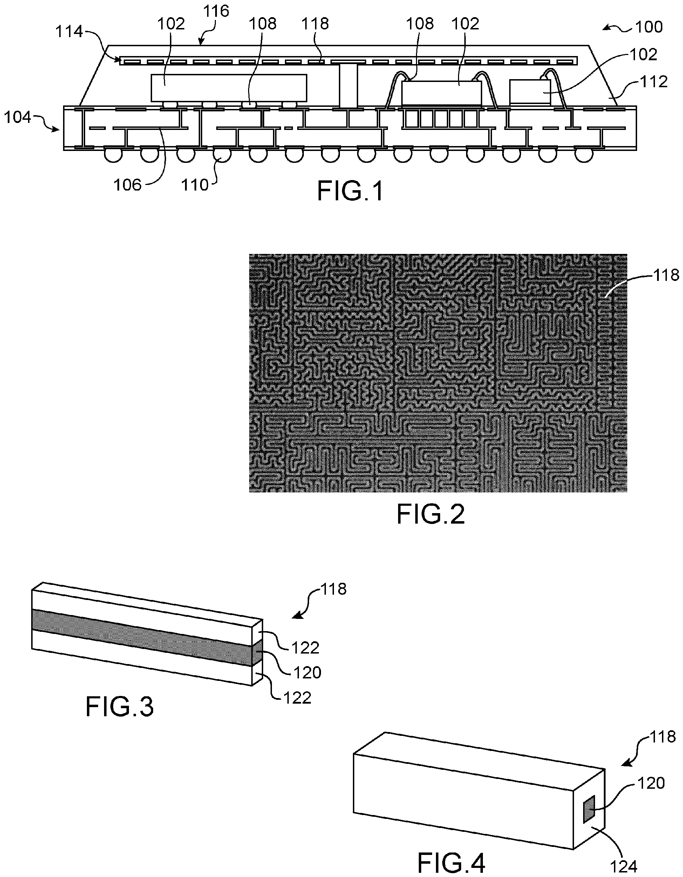

La figure 1 représente schématiquement un dispositif 100 muni d'un élément de protection selon l'invention.

Le dispositif 100 correspond ici à un boîtier-système électronique, ou SiP. Le dispositif 100 comporte des composants électroniques 102 et un support 104 sur lequel les composants 102 sont couplés. Le support 104 forme la face arrière du dispositif 100. Le support 104 correspond par exemple à un substrat organique ou céramique ou métallique.

Le dispositif 100 comporte également une couche métallique de redistribution 106 (ou RDL pour « Redistribution Layer ») disposée sur et dans le support 104 et à laquelle des connexions électriques 108, correspondant par exemple à des microbilles, des composants 102 sont couplées mécaniquement et électriquement (couplage de type flip chip à gauche et par câblage filaire à droite sur l'exemple de réalisation visible sur la figure 1). Certaines portions de la couche métallique de redistribution 106 sont reliées électriquement, à travers le support 104, à des broches de connexion 110 du dispositif 100 qui correspondent par exemple à des billes de connexions. Une ou plusieurs autres portions de la couche métallique de redistribution 106 peuvent relier électriquement entre elles des connexions électriques 108. La couche métallique de redistribution 106 comporte par exemple l'un des matériaux suivants : Cu, Au, Al.

Le dispositif 100 comporte également un matériau d'encapsulation 112 entourant les composants 102. Ce matériau d'encapsulation 112 est notamment destiné à protéger mécaniquement les composants 102. Le matériau d'encapsulation 112 comporte par exemple une résine époxy chargée en billes de silice.

Le dispositif 100 comporte un élément de protection 114 d'au moins une partie d'au moins une face 116 du dispositif 100 qui se trouve du côté opposé à celui où se trouvent les broches de connexion 110. Dans l'exemple de réalisation représenté sur la figure 1, l'élément de protection 114 protège toute la surface des composants 102 se trouvant du côté de la face 116 et est disposé au-dessus des composants 102, dans le matériau d'encapsulation 112.

L'élément de protection 114 comporte :
- un élément 118 de détection d'attaque du dispositif 100 comportant au moins un matériau électriquement conducteur à effet GMI, et
- un émetteur de champ magnétique auquel ledit matériau électriquement conducteur à effet GMI est soumis.

Dans l'exemple de réalisation décrit ici, l'élément 118 comporte des portions connectées électriquement de matériau électriquement conducteur ayant un effet GMI formant une couche de protection localisée du côté de la face avant ou arrière des composants 102 (selon le mode de report des composants 102), protégeant ainsi les composants 102 vis-à-vis d'attaques menées à travers la face 116 du dispositif 100.

Selon un exemple de réalisation, le matériau électriquement conducteur ayant un effet GMI de l'élément 118 correspond à un métal ou un alliage métallique comportant au moins l'un des métaux suivants : Fe, Ni, Co, et par exemple du NiFe et/ou CoTaZr. Le matériau de l'élément 118 peut également correspondre à un polymère conducteur ou à du carbone conducteur.

Selon un exemple de réalisation, l'élément 118 s'étend du côté de la face 116 du dispositif 100, dans un plan parallèle à la face 116, selon un motif d'un ou plusieurs serpentins, c'est-à-dire comporte de nombreuses portions reliées entre elles en formant des coudes et des chicanes afin de former un motif complexe et difficilement identifiable. La figure 2 représente l'élément 118 réalisé avec un tel motif de serpentin. Des motifs autres qu'un ou plusieurs serpentins sont possibles, comme par exemple des motifs de spirales.

Selon un exemple de réalisation, l'émetteur de champ magnétique auquel le matériau électriquement conducteur à effet GMI de l'élément 118 est soumis est au moins en partie formé par des particules de matériau magnétique (non visibles sur la figure 1) dispersées dans le matériau d'encapsulation 112. Ces particules magnétiques correspondent par exemple à des particules de magnétite, acier, ferrites, AINiCo, samarium-cobalt ou néodyme-fer-bore, et dont le diamètre est par exemple compris entre quelques centaines de nm et quelques micromètres. Un ou plusieurs matériaux magnétiques différents peuvent être utilisés pour former ces particules. Les particules magnétiques peuvent être apportées, lors de la réalisation du dispositif 100, directement incorporées au matériau d'encapsulation 112 ou sous la forme d'une encre magnétique incorporant ces particules et déposée sur le matériau 112.

Le champ magnétique, généré ici par les particules magnétiques dispersées dans le matériau d'encapsulation 112, permet le fonctionnement de l'élément 118 avec l'effet GMI. La lecture des caractéristiques de l'élément 118, notamment de son impédance, lorsqu'un courant alternatif circule dans cet élément 118 (par exemple de quelques dizaines de mA et ayant une fréquence d'environ 1 GHz) permet de vérifier qu'aucune modification n'a été apportée à l'élément 118 et à son environnement magnétique (par exemple l'émetteur de champ magnétique lorsque celui-ci est dissocié de l'élément 118), y compris lorsque le dispositif 100 n'était pas alimenté électriquement. Par exemple, l'impédance mesurée de l'élément 118 est comparée à une valeur de référence donnée pour la valeur du champ magnétique auquel l'élément 118 est théoriquement soumis. Si l'impédance mesurée est différente de la valeur de référence, des mesures de protection peuvent alors être prises, comme par exemple l'effacement de données sensibles mémorisées dans le dispositif 100 ou la mise hors service du dispositif 100. La valeur de référence est stockée dans une mémoire du dispositif 100, par exemple une mémoire non volatile (par exemple de type Flash, EEPROM) qui peut être programmable 1 seule fois (de type OTP).

En cas d'attaque par ondes électromagnétiques, la valeur du champ magnétique auquel l'élément 118 est soumis est modifiée sous l'effet de ces ondes. Cette modification du champ magnétique engendre une modification de la valeur de l'impédance de l'élément 118. L'impédance mesurée de l'élément 118 sera alors différente de la valeur attendue (qui est par exemple mémorisée comme valeur de référence dans le dispositif 100) et l'attaque sera détectée. En outre, les matériaux magnétiques forment un bon blindage et absorbent mieux les ondes électromagnétiques que les autres matériaux métalliques. Ce serait également le cas si une attaque par laser était mise en oeuvre à l'encontre du dispositif 100 car il serait nécessaire de retirer l'élément 118 pour réaliser cette attaque, et cette attaque sera détectée. Une attaque nécessitant une altération physique du matériau d'encapsulation 112 (par exemple une attaque par probing ou rétro-conception ou LASER, impliquant par exemple la réalisation d'un trou dans le matériau d'encapsulation 112) modifiera également la valeur du champ magnétique auquel l'élément 118 est soumis lorsque le matériau d'encapsulation inclut des particules magnétiques. Une attaque impliquant une altération physique de l'élément 118 modifiera également la valeur de son impédance. L'impédance mesurée de l'élément 118 sera alors différente de la valeur attendue et l'attaque sera également détectée. Les appareils utilisés pour des attaques autres que des injections de fautes EM peuvent également générer un champ magnétique modifiant la valeur du champ magnétique auquel l'élément 118 est soumis.

Ainsi, toute modification de l'environnement autour de l'élément 118 ou de la structure de l'élément 118 est détectée grâce à l'élément de protection 114 du dispositif 100.

Typiquement, l'élément de protection 114 peut être réalisé en déposant le ou les matériaux de l'élément 118, puis en mettant en oeuvre une gravure selon le motif souhaité pour l'élément de détection 118. Le matériau d'encapsulation 112 est ensuite déposé.

Le matériau électriquement conducteur à effet GMI de l'élément 118 présente au moins une anisotropie magnétique, c'est-à-dire présente au moins une orientation magnétique privilégiée dans la direction du champ magnétique imposé pendant le dépôt du matériau de l'élément 118 ou après ce dépôt par exemple par la mise en oeuvre d'un recuit sous champ magnétique. Une telle anisotropie magnétique est par exemple obtenue en imposant un champ magnétique auquel est soumis le matériau ferromagnétique doux lors de son dépôt. Cela confère à l'élément 118 une caractéristique arbitraire permettant une particularisation de l'élément 118, rendant très difficile la reproduction de l'élément 118, par exemple si un attaquant envisage de remplacer à l'identique une partie de l'élément 118 lors d'une attaque du dispositif 100 (par exemple pour réaliser un détour de fil).

Il est possible que cette anisotropie magnétique présente une variabilité générée aléatoirement, ce qui permet de renforcer la non-reproductibilité de l'élément de protection.

Dans l'exemple de réalisation précédemment décrit, l'élément 118 est formé par une portion de matériau électriquement conducteur à effet GMI s'étendant, dans un plan parallèle à la face 116 du dispositif 100, selon un motif d'un ou plusieurs serpentins. En variante, l'élément 118 peut comporter une portion 120 de matériau non-magnétique (ou paramagnétique ou diamagnétique) et électriquement conducteur disposée entre au moins deux portions 122 de matériau électriquement conducteur à effet GMI. La portion 120 comporte par exemple du titane ou de l'or, ou un métal ou un alliage métallique ne comportant pas de propriété magnétique. Cette variante est représentée schématiquement sur la figure 3 qui montre une portion d'un tel élément 118. Selon une autre variante, il est possible que l'élément 118 comporte un empilement alterné de portions 120 de matériau électriquement conducteur non magnétique et de portions 122 de matériau électriquement conducteur à effet GMI.

Selon une autre variante de réalisation, la portion 120 peut être entourée du matériau électriquement conducteur à effet GMI qui forme alors une gaine 124 autour de la portion 120. Cette autre variante est représentée schématiquement sur la figure 4 qui montre une portion d'un tel élément 118.

Dans l'exemple de réalisation précédemment décrit, l'élément de protection 114 forme une couche de protection protégeant toute la face 116 du dispositif 100. En variante, l'élément de protection 114 peut assurer la protection d'une partie seulement de la face 116 du dispositif 100. Pour cela, l'élément 118 est réalisé en regard d'une partie seulement de la face à protéger, de manière à ce que l'élément de protection 114 forme un capteur localisé en regard de la région de la face du dispositif 100 à protéger. Plusieurs capteurs peuvent coopérer pour protéger toute une face ou plusieurs faces du dispositif 100.

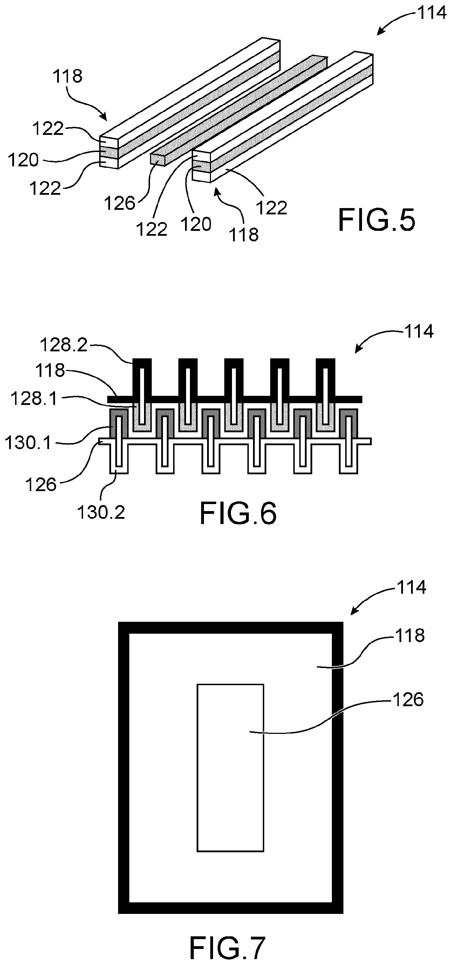

La figure 5 représente une autre variante de réalisation d'un élément de protection 114 du dispositif 100.

L'élément de protection 114 comporte ici deux éléments de détection 118 à côté desquels une portion 126 de matériau électriquement conducteur est disposée. Un courant électrique continu ou alternatif est destiné à circuler dans la portion 126 qui forme l'émetteur de champ magnétique auquel les éléments 118 sont soumis.

Le matériau d'encapsulation 112 peut ne pas comporter de particules magnétiques. Dans ce cas, l'émetteur de champ magnétique de l'élément de protection 114 n'est formé que par la portion 126. En variante, il est possible que le matériau d'encapsulation 112 comporte des particules magnétiques qui, dans ce cas, forment avec la portion 126 l'émetteur de champ magnétique de l'élément de protection 114 du dispositif 100.

Les éléments 118 et la portion 126 s'étendent du côté de la face du dispositif 100 à protéger, par exemple selon un motif de serpentin(s) et/ou de spirale(s), comme l'élément 118 selon les exemples de réalisation précédemment décrits. Lorsque la face protégée du dispositif 100 correspond à la face 116, les éléments 118 et la portion 126 peuvent être disposés de la même manière que celle représentée sur la figure 1, c'est-à-dire au-dessus des composants 102.

Même en l'absence de particules magnétiques dans le matériau d'encapsulation 112, une attaque entraînant une altération ou un retrait du matériau d'encapsulation peut changer la valeur du champ magnétique exercé sur les éléments 118 en raison de la différence de valeur de susceptibilité magnétique entre le matériau d'encapsulation 112 et l'air. De plus, si une attaque du dispositif 100 entraîne une modification de la portion 126, par exemple si un détour de fil est réalisé sur la portion 126, alors le champ magnétique auquel sont soumis les éléments 118 est modifié, engendrant une modification de l'impédance des éléments 118. Si une attaque du dispositif 100 entraîne une modification des éléments 118, par exemple si un détour de fil est réalisé sur l'un des éléments 118, la géométrie de cet élément 118 est modifiée par cette attaque, ce qui engendre une modification de son impédance. Si un détour de fil est réalisé sur l'élément 118, celui-ci est détecté soit via la perte de l'effet GMI lorsqu'un matériau non magnétique est utilisé pour ce détour de fil, soit via une modification de l'anisotropie magnétique de l'élément 118 si jamais un matériau magnétique est utilisé pour ce détour de fil.

Tout changement sur l'élément de protection 114 (modification de la distance entre la portion 126 et au moins l'un des éléments 118, modification du champ magnétique appliqué sur les éléments 118, modification des courants de Foucault générés, etc.) engendre donc une modification de l'impédance des éléments 118 qui se traduit par une détection de l'attaque contre le dispositif 100.

En variante, il est possible que l'élément de protection 114 comporte la portion 126 et un seul élément 118 disposé à côté de la portion 126.

Selon une autre variante, il est possible que le matériau électriquement conducteur de la portion 126 comporte un matériau électriquement conducteur à effet GMI comme le ou les éléments 118 disposés à côté de la portion 126. Dans ce cas, la portion 126 forme, vis-à-vis du ou des éléments 118, un émetteur de champ magnétique auquel le ou les éléments 118 sont soumis, et le ou les éléments 118 forment, vis-à-vis de la portion 126, un ou des émetteurs de champ magnétique auquel la portion 126 est soumise. Ainsi, les valeurs des impédances des éléments 118 et 126 sont intrinsèquement liées aux champs magnétiques qu'ils exercent l'un sur l'autre. Toute modification de l'un des éléments entraîne une modification de l'impédance de l'autre élément.

La figure 6 représente une autre variante de réalisation d'un élément de protection 114 du dispositif 100.

L'élément de protection 114 comporte ici un élément 118 et une portion 126 comportant tous les deux un matériau électriquement conducteur à effet GMI. Ainsi, comme dans la variante de réalisation précédemment décrite, chacun de ces éléments 118, 126 forme, vis-à-vis de l'autre, un émetteur de champ magnétique permettant d'obtenir un effet GMI dans l'autre élément.

L'élément 118 et la portion 126 s'étendent en regard de la face du dispositif 100 à protéger, par exemple selon un motif de serpentin(s) et/ou de spirale(s). Lorsque la face protégée du dispositif 100 correspond à la face 116, les éléments 118 et la portion 126 peuvent être disposés de la même manière que celle représentée sur la figure 1, c'est-à-dire au-dessus des composants 102.

Dans cette variante, plusieurs parties de l'élément 118 sont chacune formées de deux portions distinctes, référencées 128.1 et 128.2, espacées l'une de l'autre et comprenant chacune deux extrémités reliées aux deux extrémités de l'autre portion. De même, plusieurs parties de la portion 126 sont chacune formées de deux portions distinctes, référencées 130.1 et 130.2, espacées l'une de l'autre et comprenant chacune deux extrémités reliées aux deux extrémités de l'autre portion. Enfin, l'élément 118 et la portion 126 sont disposés l'un à côté de l'autre et tels que les portions 128.1 des parties de l'élément 118 se trouvant du côté de la portion 126 sont disposées de manière imbriquée, ou en forme de peignes interdigités, avec les portions 130.1 des parties de la portion 126 se trouvant du côté de l'élément 118.

Dans cette variante, la division de l'élément 118 en deux portions distinctes 128.1, 128.2 forme un diviseur du courant circulant dans l'élément 118. Il est en de même pour la portion 126. Cette configuration permet aux portions 128.1 et 130.1 interdigitées de subir un champ magnétique plus intense que les autres portions non imbriquées 128.2 et 130.2. Ces portions 128.1 et 130.1 ont donc une impédance différente (dépendant du mode de réalisation) que les portions 128.2 et 130.2, ce qui signifie que la valeur du courant circulant dans ces portions 128.1 et 130.1 est différente de celle du courant circulant dans les portions 128.2 et 130.2.

Si une attaque du dispositif 100 engendre une modification d'une des portions imbriquées 128.1 et 130.1, les portions entre lesquelles se trouve cette portion endommagée subit alors un champ magnétique différent, et le courant circulant dans ces portions change. Cette modification du courant engendre l'émission d'un champ magnétique différent, modifiant alors la valeur du courant circulant dans les portions périphériques. Ainsi, les modifications d'impédance des portions 128.1 et 130.1 engendrées par cette attaque se propagent de proche en proche dans tout l'élément de protection 114, rendant une telle attaque facilement détectable.

Dans les variantes précédemment décrites, la portion 126 s'étend en regard de la face protégée du dispositif 100 selon un motif similaire à celui du ou des éléments 118. En variante, il est possible que ce motif soit différent.

Dans toutes les variantes précédemment décrites, il est possible de ne mesurer l'impédance que de certaines parties du ou des éléments 118, qui forment alors des capteurs localisés dans différentes régions de la face protégée par l'élément de protection 114.

Selon une autre variante de réalisation, l'élément 118 et la portion 126 peuvent être utilisés comme des antennes. L'onde électromagnétique émise par l'une de ces deux antennes dépend du champ magnétique qui est exercé sur celle-ci, et la réception de cette onde par l'autre antenne dépend aussi de ce champ magnétique.

Dans cette autre variante de réalisation, la portion 126 peut comporter ou non un matériau électriquement conducteur à effet GMI.

Les figures 7, 8 et 9 représentent différentes configurations possibles de l'élément 118 et de la portion 126 formant deux antennes couplées l'une à l'autre telles que le champ magnétique émis par l'une de ces antennes agisse sur l'autre antenne.

Comme dans les précédentes variantes, l'élément 118 et la portion 126 s'étendent en regard de la face du dispositif 100 à protéger. Lorsque la face protégée du dispositif 100 correspond à la face 116, les éléments 118 et la portion 126 peuvent être disposés de la même manière que celle représentée sur la figure 1, c'est-à-dire au-dessus des composants 102.

Dans une autre variante, l'élément de détection 118 est monté en circuit résonant, par exemple de type LC ou RLC. La résonance obtenue, qui correspond à une configuration où les parties imaginaires des impédances ou admittances s'annulent dans le circuit résonnant à une fréquence donnée, dépend du champ magnétique exercé sur l'élément 118 soit par des particules magnétiques dispersées dans le matériau d'encapsulation 112, soit par au moins une portion 126 de matériau électriquement conducteur dans laquelle un courant électrique continu circule. Une modification du champ magnétique exercé sur l'élément 118 entraîne une modification de la fréquence de résonance. Ce changement de fréquence pourra être détecté pour identifier une attaque du dispositif 100.

Dans une autre variante, l'élément 118 comporte une ou plusieurs parties dont les dimensions sont telles que les propriétés électriques desdites parties sont dégradées lors d'une attaque du dispositif 100. Ainsi, cette ou ces parties dont les dimensions sont réduites par rapport au reste de l'élément 118 peuvent réaliser une fonction de fusible. Lors d'une modification du champ magnétique auquel ces parties sont soumises, cette modification engendre une augmentation du courant circulant dans ces parties de l'élément 118. Cette augmentation du courant échauffe l'élément 118, pouvant ainsi provoquer la fusion du matériau de cette ou ces parties de l'élément 118.

Dans une autre variante, l'élément 118 et la portion 126 s'étendent en regard de la face protégée du dispositif 100 et sont disposés sur des plans différents tels que la distance entre eux ne soit pas constante.

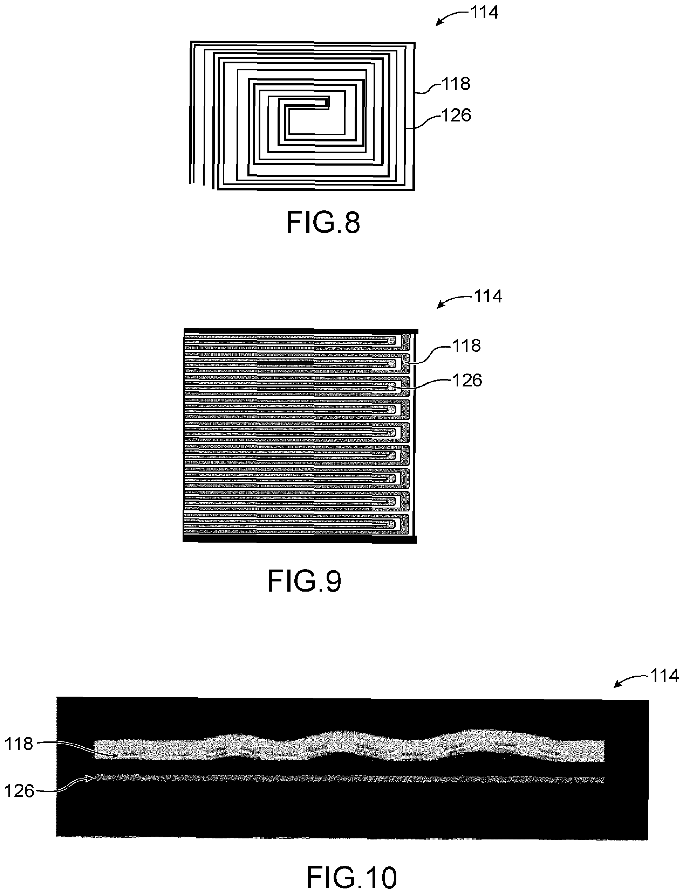

La figure 10 représente schématiquement un exemple de réalisation d'un élément de protection 114 selon cette variante de réalisation. Sur cette figure, l'élément 118 est positionné au-dessus de la portion 126 qui génère le champ magnétique servant à générer l'effet GMI dans l'élément 118. Une telle configuration est par exemple obtenue en formant tout d'abord la portion 126 selon le motif souhaité, puis en la recouvrant par une couche de matériau destinée à former une partie du matériau d'encapsulation 112. Cette couche de matériau est ensuite texturée afin de former un relief sur lequel l'élément 118 est ensuite déposé. L'élément 118 est ensuite recouvert d'une autre couche de matériau achevant la réalisation du matériau d'encapsulation 112.

Les variations de distance obtenues entre l'élément 118 et la portion 126 modifient ainsi le champ magnétique perçu par les différentes régions de l'élément 118.

Selon une autre variante de réalisation, le matériau d'encapsulation 112 peut être contraint. Ce matériau d'encapsulation 112 contraint peut correspondre par exemple à une résine époxy. Dans ce cas, des forces mécaniques s'exercent sur l'élément 118 et influencent ses propriétés, notamment l'effet GMI produit. Si le matériau d'encapsulation 112 est au moins en partie retiré localement lors d'une attaque du dispositif 100, ces forces diminuent, ce qui modifie localement la réponse de l'élément 118 basée sur l'effet GMI, et notamment son impédance. Cette modification peut être détectée, ce qui permet de détecter une attaque du dispositif 100.

Pour toutes les variantes de réalisation précédemment décrites, le dispositif 100 peut comporter un dispositif de lecture d'impédance de l'élément 118 et une mémoire dans laquelle au moins une valeur de référence de l'impédance de l'élément 118 est stockée. Une source de courant alternatif externe au dispositif 100 est couplée électriquement à l'élément de détection 118 telle que ce courant circule dans l'élément 118. Ainsi, lors du fonctionnement du dispositif 100, la valeur de l'impédance de l'élément 118 est mesurée et comparée afin de vérifier si le dispositif 100 a fait l'objet d'une attaque ou est en train de subir une attaque.

Il convient de noter que d'autres types d'éléments formant l'émetteur de champ magnétique de l'élément de protection 114 peuvent être envisagés.

## Revendications

1. Dispositif (100) de type puce ou boîtier-système électronique, comportant au moins un élément de protection (114) d'au moins une partie d'au moins une face (116) du dispositif (100), ledit élément de protection (114) étant disposé dans le dispositif (100) et comprenant au moins :
- un élément (118) de détection d'attaque du dispositif (100) comportant au moins un matériau électriquement conducteur, et
- un émetteur (126) de champ magnétique auquel ledit matériau électriquement conducteur est destiné à être soumis,
**caractérisé en ce que** le matériau électriquement conducteur est à effet de magnétoimpédance géante, GMI, et l'effet GMI est destiné à être obtenu dans le matériau électriquement conducteur à effet GMI lorsqu'il est parcouru par un courant électrique alternatif d'excitation et soumis au champ magnétique de l'émetteur (126) de champ magnétique.

2. Dispositif selon la revendication 1, dans lequel le matériau électriquement conducteur à effet GMI est un matériau ferromagnétique doux.

3. Dispositif selon l'une des revendications précédentes, dans lequel l'élément (118) de détection d'attaque du dispositif (100) comprend au moins :
- une portion du matériau électriquement conducteur à effet GMI, ou
- une portion (120) de matériau non-magnétique et électriquement conducteur disposée entre au moins deux portions (122) du matériau électriquement conducteur à effet GMI, ou
- une portion (120) de matériau non-magnétique et électriquement conducteur entourée du matériau électriquement conducteur à effet GMI qui forme une gaine (124) autour de la portion (120) de matériau non-magnétique et électriquement conducteur, ou
- un empilement alterné de portions (120) de matériau électriquement conducteur non magnétique et de portions (122) de matériau électriquement conducteur à effet GMI.

4. Dispositif (100) selon l'une des revendications précédentes, dans lequel le matériau électriquement conducteur a effet GMI présente une anisotropie magnétique présentant une variabilité générée aléatoirement.

5. Dispositif (100) selon l'une des revendications précédentes, dans lequel l'élément de protection (114) forme un capteur localisé en regard de ladite partie de la face (116) du dispositif (100) protégée par l'élément de protection (114), ou dans lequel l'élément de protection (114) forme une couche de protection disposée en regard de toute la surface de la face (116) du dispositif (100) protégée par l'élément de protection (114).

6. Dispositif (100) selon l'une des revendications précédentes, dans lequel l'élément (118) de détection d'attaque du dispositif s'étend, dans un plan parallèle à ladite face (116) du dispositif (100) protégée par l'élément de protection (114), selon au moins un motif de serpentin et/ou de spirale.

7. Dispositif (100) selon l'une des revendications précédentes, dans lequel l'émetteur de champ magnétique comporte des particules de matériau magnétique dispersées dans un matériau (112) entourant au moins partiellement l'élément (118) de détection d'attaque du dispositif (100), et/ou dans lequel l'émetteur de champ magnétique comporte au moins une portion (126) de matériau électriquement conducteur dans lequel un courant électrique continu ou alternatif est destiné à circuler.

8. Dispositif (100) selon la revendication 7, dans lequel le matériau électriquement conducteur de l'émetteur (126) de champ magnétique est un matériau électriquement conducteur à effet GMI.

9. Dispositif (100) selon la revendication 8, dans lequel :
- plusieurs parties de l'élément (118) de détection d'attaque du dispositif (100) sont chacune formées d'au moins deux portions (128.1, 128.2) distinctes, espacées l'une de l'autre et comprenant chacune deux extrémités reliées aux deux extrémités de l'autre portion, et
- plusieurs parties de la portion (126) de matériau électriquement conducteur de l'émetteur de champ magnétique sont chacune formées d'au moins deux portions (130.1, 130.2) distinctes, espacées l'une de l'autre et comprenant chacune deux extrémités reliées aux deux extrémités de l'autre portion, et
- l'élément (118) de détection d'attaque du dispositif (100) et la portion (126) de matériau électriquement conducteur de l'émetteur de champ magnétique sont disposés l'un à côté de l'autre et tels que les portions (128.1) des parties de l'élément (118) de détection d'attaque du dispositif (100) se trouvant du côté de la portion (126) de matériau électriquement conducteur de l'émetteur de champ magnétique sont disposées de manière imbriquée avec les portions (130.1) des parties de la portion (126) de matériau électriquement conducteur de l'émetteur de champ magnétique se trouvant du côté de l'élément (118) de détection d'attaque du dispositif (100).

10. Dispositif (100) selon l'une des revendications 7 à 9, dans lequel la portion (126) de matériau électriquement conducteur de l'émetteur de champ magnétique s'étend, dans un plan parallèle à ladite face (116) du dispositif (100) protégée par l'élément de protection (114), selon au moins un motif de serpentin et/ou de spirale.

11. Dispositif (100) selon l'une des revendications 7 à 10, dans lequel l'élément de protection (114) comporte au moins deux éléments (118) de détection d'attaque du dispositif (100) distincts s'étendant l'un à côté de l'autre et à côté desquels la portion (126) de matériau électriquement conducteur de l'émetteur de champ magnétique est disposée.

12. Dispositif (100) selon l'une des revendications 7 à 11, dans lequel l'élément (118) de détection d'attaque du dispositif (100) et la portion (126) de matériau électriquement conducteur de l'émetteur de champ magnétique sont disposés dans deux plans différents et tels que la distance entre eux, selon une direction perpendiculaire à la face (116) du dispositif (100) protégée par l'élément de protection (114), ne soit pas constante.

13. Dispositif (100) selon l'une des revendications précédentes, dans lequel l'élément (118) de détection d'attaque du dispositif (100) comporte une ou plusieurs parties dont les dimensions sont telles que lesdites parties sont dégradées lors d'une attaque du dispositif (100).

14. Dispositif (100) selon l'une des revendications précédentes, comportant en outre :
- un dispositif de lecture d'impédance de l'élément (118) de détection d'attaque du dispositif (100) ;
- une mémoire dans laquelle au moins une valeur de référence de l'impédance de l'élément (118) de détection d'attaque du dispositif (100) est destinée à être stockée.

15. Dispositif (100) selon l'une des revendications précédentes, comportant en outre une mémoire dans laquelle plusieurs valeurs binaires sont stockées, chacune desdites valeurs binaires étant représentative de la comparaison entre une valeur de référence et une valeur d'impédance de l'élément (118) de détection d'attaque du dispositif (100) pour une valeur donnée du champ magnétique émis par l'émetteur (126) de champ magnétique.

## Patentansprüche

1. Vorrichtung (100) vom Typ eines Chips oder System-in-Package, die mindestens ein Element zum Schutz (114) mindestens eines Teils mindestens einer Fläche (116) der Vorrichtung (100) umfasst, wobei das Schutzelement (114) in der Vorrichtung (100) angeordnet ist und mindestens umfasst:
- ein Element (118) zum Erkennen eines Angriffs der Vorrichtung (100), das mindestens ein elektrisch leitfähiges Material umfasst, und
- einen Sender (126) eines Magnetfelds, dem das elektrisch leitfähige Material ausgesetzt werden soll,
**dadurch gekennzeichnet, dass** das elektrisch leitfähige Material einen Riesenmagnetoimpedanz-, GMI-, Effekt aufweist und der GMI-Effekt in dem elektrisch leitfähigen Material mit GMI-Effekt erhalten werden soll, wenn es von einem elektrischen Anregungswechselstrom durchflossen und dem Magnetfeld des Magnetfeldsenders (126) ausgesetzt wird.

2. Vorrichtung nach Anspruch 1, wobei das elektrisch leitfähige Material mit GMI-Effekt ein weiches ferromagnetisches Material ist.

3. Vorrichtung nach einem der vorstehenden Ansprüche, wobei das Angriffserkennungselement (118) der Vorrichtung (100) mindestens umfasst:
- einen Abschnitt des elektrisch leitfähigen Materials mit GMI-Effekt, oder
- einen Abschnitt (120) aus nichtmagnetischem und elektrisch leitfähigem Material, der zwischen mindestens zwei Abschnitten (122) des elektrisch leitfähigen Materials mit GMI-Effekt angeordnet ist, oder
- einen Abschnitt (120) aus nichtmagnetischem und elektrisch leitfähigem Material, der von dem elektrisch leitfähigen Material mit GMI-Effekt umgeben ist, das einen Mantel (124) um den Abschnitt (120) aus nichtmagnetischem und elektrisch leitfähigem Material bildet, oder
- einen abwechselnden Stapel aus Abschnitten (120) aus nichtmagnetischem, elektrisch leitfähigem Material und Abschnitten (122) aus elektrisch leitfähigem Material mit GMI-Effekt.

4. Vorrichtung (100) nach einem der vorstehenden Ansprüche, wobei das elektrisch leitfähige Material mit GMI-Effekt eine magnetische Anisotropie aufweist, die eine zufällig erzeugte Variabilität aufweist.

5. Vorrichtung (100) nach einem der vorstehenden Ansprüche, wobei das Schutzelement (114) einen Sensor bildet, der dem Teil der Fläche (116) der Vorrichtung (100), die durch das Schutzelement (114) geschützt wird, zugewandt liegt, oder wobei das Schutzelement (114) eine Schutzschicht bildet, die der gesamten Oberfläche der Fläche (116) der Vorrichtung (100), die durch das Schutzelement (114) geschützt wird, zugewandt angeordnet ist.

6. Vorrichtung (100) nach einem der vorstehenden Ansprüche, wobei sich das Angriffserkennungselement (118) der Vorrichtung in einer Ebene parallel zu der Fläche (116) der Vorrichtung (100), die durch das Schutzelement (114) geschützt wird, in mindestens einem Schlangen- und/oder Spiralmuster erstreckt.

7. Vorrichtung (100) nach einem der vorstehenden Ansprüche, wobei der Magnetfeldsender Partikel aus magnetischem Material umfasst, die in einem Material (112), das das Angriffserkennungselement (118) der Vorrichtung (100) mindestens teilweise umgibt, dispergiert sind, und/oder wobei der Magnetfeldsender mindestens einen Abschnitt (126) aus elektrisch leitfähigem Material umfasst, in dem ein elektrischer Gleich- oder Wechselstrom fließen soll.

8. Vorrichtung (100) nach Anspruch 7, wobei das elektrisch leitfähige Material des Magnetfeldsenders (126) ein elektrisch leitfähiges Material mit GMI-Effekt ist.

9. Vorrichtung (100) nach Anspruch 8, wobei:
- mehrere Teile des Angriffserkennungselements (118) der Vorrichtung (100) jeweils aus mindestens zwei getrennten Abschnitten (128.1, 128.2) gebildet sind, die voneinander beabstandet sind und jeweils zwei Enden umfassen, die mit den zwei Enden des anderen Abschnitts verbunden sind, und
- mehrere Teile des Abschnitts (126) aus elektrisch leitfähigem Material des Magnetfeldsenders jeweils aus mindestens zwei getrennten Abschnitten (130.1, 130.2) gebildet sind, die voneinander beabstandet sind und jeweils zwei Enden umfassen, die mit den zwei Enden des anderen Abschnitts verbunden sind, und
- das Angriffserkennungselement (118) der Vorrichtung (100) und der Abschnitt (126) aus elektrisch leitfähigem Material des Magnetfeldsenders nebeneinander und derart angeordnet sind, dass die Abschnitte (128.1) der Teile des Angriffserkennungselements (118) der Vorrichtung (100), die sich auf der Seite des Abschnitts (126) aus elektrisch leitfähigem Material des Magnetfeldsenders befinden, mit den Abschnitten (130.1) der Teile des Abschnitts (126) aus elektrisch leitfähigem Material des Magnetfeldsenders, die sich auf der Seite des Angriffserkennungselements (118) der Vorrichtung (100) befinden, verschachtelt angeordnet sind.

10. Vorrichtung (100) nach einem der Ansprüche 7 bis 9, wobei sich der Abschnitt (126) aus elektrisch leitfähigem Material des Magnetfeldsenders in einer Ebene parallel zu der Fläche (116) der Vorrichtung (100), die durch das Schutzelement (114) geschützt wird, in mindestens einem Schlangen- und/oder Spiralmuster erstreckt.

11. Vorrichtung (100) nach einem der Ansprüche 7 bis 10, wobei das Schutzelement (114) mindestens zwei getrennte Angriffserkennungselemente (118) der Vorrichtung (100) umfasst, die sich nebeneinander erstrecken und neben denen der Abschnitt (126) aus elektrisch leitfähigem Material des Magnetfeldsenders angeordnet ist.

12. Vorrichtung (100) nach einem der Ansprüche 7 bis 11, wobei das Angriffserkennungselement (118) der Vorrichtung (100) und der Abschnitt (126) aus elektrisch leitfähigem Material des Magnetfeldsenders in zwei unterschiedlichen Ebenen und derart angeordnet sind, dass der Abstand zwischen ihnen in einer Richtung senkrecht zu der Fläche (116) der Vorrichtung (100), die durch das Schutzelement (114) geschützt wird, nicht konstant ist.

13. Vorrichtung (100) nach einem der vorstehenden Ansprüche, wobei das Angriffserkennungselement (118) der Vorrichtung (100) einen oder mehrere Teile umfasst, deren Abmessungen derart sind, dass die Teile bei einem Angriff der Vorrichtung (100) beschädigt werden.

14. Vorrichtung (100) nach einem der vorstehenden Ansprüche, weiter umfassend:
- eine Vorrichtung zum Auslesen einer Impedanz des Angriffserkennungselements (118) der Vorrichtung (100);
- einen Speicher, in dem mindestens ein Referenzwert der Impedanz des Angriffserkennungselements (118) der Vorrichtung (100) gespeichert werden soll.

15. Vorrichtung (100) nach einem der vorstehenden Ansprüche, die weiter einen Speicher umfasst, in dem mehrere Binärwerte gespeichert sind, wobei jeder der Binärwerte für den Vergleich zwischen einem Referenzwert und einem Impedanzwert des Angriffserkennungselements (118) der Vorrichtung (100) bei einem gegebenen Wert des vom Magnetfeldsender (126) emittierten Magnetfeldes repräsentativ ist.

## Claims

1. A chip or SiP type device (100), comprising at least one element (114) for protecting at least a portion of at least one face (116) of the device (100), said at least one protective element (114) being disposed in the device (100) and comprising at least:
- an attack detection element (118) of the device (100) comprising at least one electrically conductive material, and
- a magnetic field emitter (126) to which said electrically conductive material is to be subjected,
**characterized in that** the electrically conductive material is with a giant magneto impedance effect, GMI, and the GMI effect is to be achieved in the GMI-effect electrically conductive material when an exciting alternating electric current flows therethrough and when subjected to the magnetic field of the magnetic field emitter (126).

2. The device according to claim 1, wherein the GMI-effect electrically conductive material is a soft ferromagnetic material.

3. The device according to any of the preceding claims, wherein the attack detection element (118) of the device (100) comprises at least:
- a portion of the GMI-effect electrically conductive material, or
- a portion (120) of non-magnetic and electrically conductive material disposed between at least two portions of the GMI-effect electrically conductive material, or
- a portion (120) of non-magnetic and electrically conductive material surrounded by the GMI-effect electrically conductive material which forms a sheath (124) around the portion (120) of non-magnetic and electrically conductive material, or
- an alternating stack of portions (120) of non-magnetic electrically conductive material and portions of the GMI-effect electrically conductive material.

4. The device according to any of the preceding claims, wherein the GMI-effect electrically conductive material has a magnetic anisotropy with randomly generated variability.

5. The device according to any of the preceding claims, wherein the protective element (114) forms a sensor situated in front of said part of the face (116) of the device (100) protected by the protective element (114), or wherein the protective element (114) forms a protective layer disposed in front of the entire surface of the face (116) of the device (100) protected by said at least one protective element (114).

6. The device (100) according to any of the preceding claims, wherein the attack detection element (118) of the device extends, in a plane parallel to said face (116) of the device (100) protected by the protective element (114), in at least one coil and/or spiral pattern.

7. The device (100) according to any of the preceding claims, wherein the magnetic field emitter comprises particles of magnetic material dispersed in a material (112) at least partially surrounding the attack detection element (118) of the device (100), and/or wherein the magnetic field emitter comprises at least one portion (126) of electrically conductive material through which a direct or alternating electric current is to flow.

8. The device (100) according to claim 7, wherein the electrically conductive material of the magnetic field emitter (126) is a GMI-effect electrically conductive material.

9. The device (100) according to claim 8, wherein:
- several parts of the attack detection element (118) of the device (100) are each formed by at least two distinct portions (128.1, 128.2), spaced apart from each other and each comprising two ends connected to both ends of the other portion, and
- several parts of the portion (126) of electrically conductive material of the magnetic field emitter are each formed by at least two distinct portions (130.1, 130.2), spaced apart from each other and each comprising two ends connected to both ends of the other portion, and
- the attack detection element (118) of the device (100) and the portion (126) of electrically conductive material of the magnetic field emitter are disposed next to each other and such that the portions (128.1) of the parts of the attack detection element (118) of the device (100) being on the side of the portion (126) of electrically conductive material of the magnetic field emitter are disposed in an interlocking manner with the portions (130.1) of the parts of the portion (126) of electrically conductive material of the magnetic field emitter being on the side of the attack detection element (118) of the device (100).

10. The device (100) according to any of claims 7 to 9, wherein the portion (126) of electrically conductive material of the magnetic field emitter extends, in a plane parallel to said face (116) of the device (100) protected by the protective element (114), in at least a coil and/or spiral pattern.

11. The device (100) according to any of claims 7 to 10, wherein said at least one protective element (114) comprises at least two distinct attack detection elements (118) of the device (100) extending next to each other and next to which the portion (126) of electrically conductive material of the magnetic field emitter is disposed.

12. The device (100) according to any of claims 7 to 11, wherein the attack detection element (118) of the device (100) and the portion (126) of electrically conductive material of the magnetic field emitter are disposed in two different planes and such that the distance between them, along a direction perpendicular to the face (116) of the device (100) protected by said at least one protective element (114), is not constant.

13. The device (100) according to any of the preceding claims, wherein the attack detection element (118) of the device (100) comprises one or more parts whose dimensions are such that said parts are degraded during an attack of the device (100).

14. The device (100) according to any of the preceding claims, further comprising:
- a device for reading the impedance of the attack detection element (118) of the device (100);
- a memory in which at least one reference value of the impedance of the attack detection element (118) of the device (100) is to be stored.

15. The device (100) according to any of the preceding claims, further comprising a memory in which a plurality of binary values are stored, each of said binary values being representative of the comparison between a reference value and an impedance value of the attack detection element (118) of the device (100) for a given value of the magnetic field emitted by the magnetic field emitter (126).
